# EUROPÄISCHE PATENTSCHRIFT

(11) **EP 3 389 978 B1**
(45) Veröffentlichungstag und Bekanntmachung des Hinweises auf die Patenterteilung: **24.07.2019**
(21) Anmeldenummer: 16812946.8
(22) Anmeldetag: 15.12.2016
(51) Int. Cl.: B29C 45/17

(54) **VERFAHREN ZUR HERSTELLUNG EINES ROHRES SOWIE SPRITZGIESSVORRICHTUNG**
METHOD FOR PRODUCING A TUBE AND INJECTION-MOULDING DEVICE
PROCÉDÉ POUR LA FABRICATION D'UN TUBE AINSI QUE DISPOSITIF DE MOULAGE PAR INJECTION

(30) Priorität: 18.12.2015 DE 102015225938
(43) Veröffentlichungstag der Anmeldung: 24.10.2018
(73) Patentinhaber: Kautex Textron GmbH & Co. KG, 53229 Bonn (DE)
(72) Erfinder: WOLF, Hartmut, 53639 Königswinter (DE)
(74) Vertreter: Richly & Ritschel Patentanwälte PartG mbB
(86) Internationale Anmeldenummer: PCT/EP2016/081264
(87) Internationale Veröffentlichungsnummer: WO 2017/102987

(56) Entgegenhaltungen:
- EP-A1- 2 511 065
- DE-A1-102014 112 262
- JP-A- H10 180 812
- JP-A- 2012 213 919
- US-A1- 2012 068 388
- US-A1- 2013 236 591

## Beschreibung

Die Erfindung betrifft ein Verfahren zur Herstellung eines Rohres durch Spritzgießen einer thermoplastischen Formmasse unter Verwendung einer Spritzgießvorrichtung mit einer Artikelkavität, die die Außenkontur des Rohres definiert, mit einer Injektionsvorrichtung, die dazu ausgebildet ist, ein Projektil durch die mit der thermoplastischen Formmasse gefüllte Artikelkavität unter Verdrängung einer flüssigen Seele der Formmasse zu treiben.

Die Erfindung betrifft weiterhin eine Spritzgießvorrichtung zur Herstellung von Rohren mit einem eine Artikelkavität bildenden Werkzeug, mit Mitteln zum Füllen der Artikelkavität mit einer thermoplastischen Formmasse, mit einer Injektionsvorrichtung zur Injektion eines Fluids gegen ein durch die Artikelkavität zu treibendes Projektil von einer ersten Öffnung der Artikelkavität in Richtung auf eine zweite Öffnung der Artikelkavität und mit einer Nebenkavität zur Aufnahme der von dem Projektil verdrängten Formmasse.

Die Erfindung betrifft insbesondere ein Verfahren zur Herstellung eines Rohres, beispielsweise eines Einfüllrohres für einen Kraftstoffbehälter oder einen Nebenflüssigkeitsbehälter eines Kraftfahrzeuges, welches eine einstückig angeformte Geometrie zur Aufnahme von Anschlussbauteilen, wie beispielsweise Rohrstutzen, Rastverbindern oder dergleichen aufweist.

Im Stand der Technik sind diverse Verfahren bekannt, um Rohre aus thermoplastischem Kunststoff herzustellen. Solche Rohre können beispielsweise durch Extrusionsblasformen, insbesondere durch Saugblasformen oder durch Spritzgießen hergestellt werden. Rohre, die in verschiedenen Raumachsen gekrümmt sind, sogenannte 3-D-Rohre, werden häufig durch Saugblasformen hergestellt. Dabei wird ein schlauchförmiger Vorformling extrudiert und in ein entsprechendes Blasformwerkzeug eingezogen. Auch sind Extrusionsverfahren bekannt, bei welchen schlauchförmige Vorformlinge in ein geöffnetes Werkzeug eingelegt werden, wobei das Ausformen der Vorformlinge innerhalb des Werkzeugs durch Anwendung von Differenzdruck erfolgt und wobei das Werkzeug die Außenkontur des Rohres abformt.

Darüber hinaus ist es bekannt, Rohre durch Spritzgießen mittels sogenannter Projektilinjektionstechnik zu fertigen. Bei diesem Verfahren wird ein auf einem Injektor platziertes Projektil durch die Artikelkavität des gefüllten Werkzeugs getrieben, wobei die schmelzeflüssige Seele des thermoplastischen Kunststoffs in eine Nebenkavität verdrängt wird, die nach der Polymervorfüllung über hydraulisch betätigbare Schieber freigegeben wird. Solche Rohre haben einen definierten Innendurchmesser und lassen sich mit einem solchen definierten, konstanten Innendurchmesser verhältnismäßig reproduzierbar herstellen.

Beispielsweise ist aus der JP 2012 213919 A ein entsprechendes Verfahren zur Herstellung eines Rohres durch Spritzgießen einer thermoplastischen Formmasse unter Verwendung einer Injektionsvorrichtung bekannt.

Insbesondere die Herstellung von Rohren zum Einbau in Kraftfahrzeugen als Lüftungsrohre für Klimaanlagen oder als Einfüllrohre für Kraftstoffbehälter, Wischwasserbehälter oder Harnstoffbehälter oder Rohre als Teile der Verbrennungsluftzufuhr bei Brennkraftmaschinen für Kraftfahrzeuge werden durch die vorstehend beschriebenen Verfahren hergestellt. Solche Rohre sind mit aufgeweiteten Anschlussmuffen, Gewindestutzen und Verzweigungen zu versehen, die bedingt durch die zuvor beschriebenen Herstellungsverfahren verhältnismäßig schwierig anzuformen sind. Beispielsweise haben spritzgegossene Rohre, die mit der Wasserinjektionstechnik oder der Projektilinjektionstechnik hergestellt werden, keine definierte Anschlussgeometrie an ihren Enden. Bedingt durch die Werkzeugteilung ist es auch verhältnismäßig schwierig, an den Anschlussenden der Rohre entsprechende Dichtgeometrien vorzusehen.

Im Stand der Technik ist es daher bekannt, die Rohre insgesamt mehrteilig auszubilden, beispielsweise Anschlussgeometrien für Rastverbinder endseitig anzuschweißen.

Auch ist eine mechanische Nachbearbeitung der Enden der Rohre zur Herstellung einer definierten Anschlussgeometrie bekannt.

Der Erfindung liegt die Aufgabe zugrunde, ein Verfahren zur Herstellung eines Rohres durch Spritzgießen einer thermoplastischen Formmasse bereitzustellen, mit welchem verhältnismäßig einfach in einem Arbeitsgang eine definierte Anschlussgeometrie an einem Ende des Rohres hergestellt werden kann.

Unter einer definierten Anschlussgeometrie im Sinne der vorliegenden Erfindung ist eine reproduzierbare dimensionsgenaue Herstellung einer Anschlussgeometrie beispielsweise im Sinne einer Muffe oder dergleichen zu verstehen, in die passgenau und dichtend ein Anschlussbauteil eingeführt werden kann.

Die der Erfindung zugrundeliegende Aufgabe wird gelöst mit den Merkmalen des Verfahrensanspruch 1.

Die Aufgabe wird weiterhin gelöst mit den Merkmalen des Vorrichtungsanspruchs 11, gemäß dem eine Spritzgießvorrichtung zur Herstellung von Rohren, die insbesondere zur Durchführung des Verfahrens gemäß der Erfindung vorgesehen ist.

Vorteilhafte Ausgestaltungen der Erfindung ergeben sich aus den jeweiligen Unteransprüchen.

Nach einem Gesichtspunkt der Erfindung wird ein Verfahren zu Herstellung eines Rohres durch Spritzgießen einer thermoplastischen Formmasse bereitgestellt, unter Verwendung einer Spritzgießvorrichtung mit einer Artikelkavität, die die Außenkontur des Rohres definiert, mit einer Injektionsvorrichtung, die dazu ausgebildet ist, ein Projektil durch die mit der thermoplastischen Formmasse gefüllte Artikelkavität unter Verdrängung einer flüssigen Seele der Formmasse zu treiben, wobei das Verfahren folgende Verfahrensschritte umfasst:
A) Einführen eines Projektils in eine erste Öffnung der Artikelkavität,
B) Verschließen einer zweiten von der ersten Öffnung entfernt angeordneten Öffnung der Artikelkavität mit einem Formkern, der mit der Artikelkavität einen Formhohlraum bildet und der eine mit der Formmasse befüllbare Nebenkavität aufweist,
C) Wenigstens teilweises Füllen der Artikelkavität und des Formhohlraums mit der thermoplastischen Formmasse,
D) Hindurchtreiben des Projektils durch die Artikelkavität von der ersten Öffnung zu der zweiten Öffnung unter teilweiser Verdrängung der Formmasse in die Nebenkavität, wobei das Projektil gegen den oder in den Formkern getrieben wird und
E) Ziehen des Formkerns mit der gefüllten Nebenkavität, wobei die verdrängte Formmasse von der das Rohr bildenden Formmasse getrennt wird, und wobei zwischen der das Rohr bildenden Formmasse und der in die Nebenkavität verdrängten Formmasse eine Dünnstelle oder eine Sollbruchlinie erzeugt wird.

Als thermoplastische Formmasse im Sinne der Erfindung kann jedes beliebige thermoplastische Polymer verwendet werden. Beispielsweise kann als thermoplastische Formmasse ein thermoplastischer Kunststoff vorgesehen sein, der ausgewählt ist aus einer Gruppe umfassend Polyethylen hoher Dichte, Polyamid, Polyamid 6, Polyamid 12, Polyurethan, Polycarbonat, Acrylnitril-Butadien-Styrol-Copolymerisat, Polyketone, Polystyrol, thermoplastische Elastomere auf Olefinbasis, vernetzte thermoplastische Elastomere auf Olefinbasis, thermoplastische Elastomere auf Urethanbasis, thermoplastische Polyester-Elastomere und thermoplastische Copolymere.

Das für die Zwecke des Verfahrens verwendete Projektil kann als ein an und für sich bekanntes Kunststoff-Projektil ausgebildet sein.

Die Spritzgießvorrichtung gemäß der Erfindung umfasst zweckmäßigerweise ein Werkzeug mit einem oder mehreren die Artikelkavität bildenden Teilen, beispielsweise Formhälften, sowie Mittel zum Füllen der Artikelkavität.

Das Verfahren betrifft vorzugsweise die Herstellung eines Rohres aus thermoplastischem Kunststoff als Einfüllrohr eines Fluidbehälters für ein Kraftfahrzeug, das vorzugsweise wenigstens einen muffenartig aufgeweiteten Endabschnitt aufweist.

Das Füllen der Artikelkavität mit einer üblichen hierfür vorgesehenen Extrusionseinrichtung, beispielsweise mit einem Schubschneckenextruder, kann teilweise oder vollständig erfolgen.

Das bei dem Verfahren verwendete Projektil kann beispielsweise mit einer Injektionsvorrichtung zur Injektion von Wasser durch die ganz oder teilweise gefüllte Artikelkavität hindurchgetrieben werden. Hierzu kann die Injektionsvorrichtung einen Projektilträger aufweisen, der mit einem oder mehreren Fluidkanälen durchsetzt sein kann und an seinem zur Aufnahme des Projektils ausgebildeten Ende eine Injektionsdüse ausbildet. Durch eine Beaufschlagung der Injektionsdüse mit einem unter hohem Druck stehenden Fluid, beispielsweise mit Wasser, kann mittels des Fluids das Projektil durch die Artikelkavität getrieben werden. Dabei wird die schmelzeflüssige Seele der von der Artikelkavität aufgenommenen thermoplastischen Formmasse durch das Projektil in die Nebenkavität verdrängt.

Erfindungsgemäß ist vorgesehen, an einer endseitigen Öffnung der Artikelkavität einen Formkern vorzusehen, der die Artikelkavität endseitig abdichtet und der mit der Artikelkavität einen mit der thermoplastischen Formmasse befüllbaren Formhohlraum bildet, beispielsweise zur Ausbildung eines Muffenendes des Rohres.

Der Formkern formt in der Artikelkavität eine kalibrierte Innenwand des Rohres aus, wobei erfindungsgemäß weiterhin vorgesehen ist, die Formmasse in die Nebenkavität des Formkerns zu verdrängen und nach der Ausformung des Rohres durch das Ziehen des Formkerns die von dem Projektil verdrängte Formmasse von der das Rohr bildenden Formmasse zu trennen. Auf diese Art und Weise wird insbesondere ein separater Angusskanal in die Nebenkavität vermieden.

Die Verfahrensschritte A) bis E) werden vorzugsweise in der Reihenfolge ihrer Aufzählung durchgeführt.

Gemäß der Erfindung ist es vorgesehen, dass zwischen der das Rohr bildenden Formmasse und der in die Nebenkavität verdrängten Formmasse noch vor dem Ziehen des Formkerns eine Dünnstelle oder eine Sollbruchlinie erzeugt wird.

Erfindungsgemäß kann vorgesehen sein, dass die Nebenkavität des Formkerns während des Füllens der Artikelkavität zugehalten wird, beispielsweise mittels eines oder mehrerer Schieber.

Die Nebenkavität kann unmittelbar vor dem Hindurchtreiben des Projektils durch die Artikelkavität geöffnet werden.

Dies kann, wie bereits erwähnt, mittels eines oder mehrerer hydraulisch betätigbarer Schieber erfolgen, alternativ kann die Nebenkavität unter Zuhilfenahme des von der verdrängten Formmasse erzeugten Schmelzedrucks geöffnet werden.

Bei dem Verfahren gemäß der Erfindung ist zunächst vorgesehen, die Artikelkavität und den von dem Formkern gebildeten Formhohlraum vollständig oder teilweise mit der Formmasse zu befüllen, sodann die Nebenkavität freizugeben und anschließend das Projektil durch die Artikelkavität zu treiben, wobei das Projektil die schmelzeflüssige Seele der Formmasse in die Nebenkavität verdrängt.

Das Projektil hat einen geringeren Durchmesser als der Außendurchmesser der Artikelkavität, so dass eine mehr oder weniger definierte Rohrwand stehen bleibt.

Ein Verschlusskörper des Formkerns hält zweckmäßigerweise zunächst eine Öffnung der Nebenkavität zu. Die Nebenkavität kann beispielsweise als rohrförmiger Fortsatz der Artikelkavität ausgebildet sein. Das Zuhalten der Nebenkavität kann beispielsweise mit einem federbelasteten oder hydraulisch betätigten Verschlusskörper zugehalten werden, der unter dem Schmelzedruck der verdrängten Formmasse zurückgetrieben wird. Wie vorstehend erwähnt, kann das auch mechanisch mittels einer entsprechenden Steuerung bewerkstelligt werden.

Bei einer zweckmäßigen Variante des Verfahrens ist vorgesehen, dass der Formkern einen bewegbaren Verschlusskörper aufweist, der die Nebenkavität zuhält und der unmittelbar vor dem Füllen der Artikelkavität oder während des Füllens der Artikelkavität in eine die Nebenkavität freigebende, geöffnete Stellung bewegt wird.

Bei einer vorteilhaften Ausgestaltung des Verfahrens der Erfindung ist vorgesehen, dass das Projektil vollständig in die Nebenkavität hineingetrieben wird und in der Endlage die Nebenkavität verschließt.

Alternativ kann vorgesehen sein, dass das Projektil nur teilweise in die Nebenkavität hineingetrieben wird, wobei eine Mantelfläche des Projektils gegen eine umlaufende Quetschkante des Formkerns zur Anlage gebracht wird und das Projektil in dieser Endlage die Nebenkavität verschließt. Dabei erzeugt das Projektil beim Anschlagen gegen die Quetschkante des Formkerns eine Sollbruchlinie, die dazu dient, die das Rohr bildende Formmasse von der die Nebenkavität des Formkerns verdrängten Formmasse beim Ziehen des Formkerns zu trennen.

Ebenso kann vorgesehen sein, dass das Projektil teilweise in die Nebenkavität hineingetrieben wird, wobei ein umlaufender Absatz des Projektils gegen eine Stirnseite des Formkerns zur Anlage gebracht wird, wobei ebenso das Projektil in dieser Endlage die Nebenkavität verschließt.

Hierzu kann das Projektil eine durchbrochene Mantelfläche aufweisen, in der sich thermoplastische Formmasse ansammeln kann, wobei sich die Formmasse beim Aushärten mit dem Projektil verbindet, sodass der Formkern mit dem Projektil gezogen werden kann.

Vorzugsweise ist in der Mantelfläche des Projektils ein hinterschnittenes Sackloch vorgesehen.

Ein weiterer Gesichtspunkt der Erfindung betrifft eine Spritzgießvorrichtung, die insbesondere zur Durchführung des vorstehend beschriebenen Verfahrens ausgebildet ist. Dieser Gesichtspunkt betrifft eine Spritzgießvorrichtung zur Herstellung von Rohren mit einem eine Artikelkavität bildenden Werkzeug, mit Mitteln zum Füllen der Artikelkavität mit einer thermoplastischen Formmasse, mit einer Injektionsvorrichtung zur Injektion eines Fluids gegen ein durch die Artikelkavität zu treibendes Projektil von einer ersten Öffnung der Artikelkavität in Richtung auf eine zweite Öffnung der Artikelkavität, mit einer Nebenkavität zur Aufnahme der von dem Projektil verdrängten Formmasse mit einem in die zweite Öffnung einsetzbaren Formkern, wobei der Formkern mit der Artikelkavität einen füllbaren Formhohlraum ausbildet, wobei der Formkern ein Volumen umschließt, welches die Nebenkavität bildet, wobei das Volumen der Nebenkavität einen Querschnitt aufweist, der kleiner oder etwa gleich dem Querschnitt des Projektils ist, und wobei eine innere Begrenzungswand der Nebenkavität mit wenigstens einer Vertiefung und/oder einer Einprägung versehen ist.

Als Werkzeug im Sinne der vorliegenden Patentanmeldung werden diejenigen Teile der Spritzgießvorrichtung bezeichnet, die die Artikelkavität bilden. Das Werkzeug im Sinne der Erfindung kann weitere bewegliche Formteile wie Schieber, bewegliche Formkerne und dergleichen aufweisen.

Die Injektionsvorrichtung zur Injektion eines Fluids gegen das durch die Artikelkavität zu treibende Projektil umfasst zweckmäßigerweise einen Projektilträger, der mit einem oder mehreren Fluidkanälen durchsetzt sein kann und der an seinem zur Aufnahme des Projektils ausgebildeten Ende eine Injektionsdüse ausbildet.

Die Spritzgießvorrichtung gemäß der Erfindung kann wenigstens einen Anguss umfassen, der in die Artikelkavität mündet. Grundsätzlich können sowohl die Artikelkavität als auch die Nebenkavität einen vieleckigen bzw. prismatischen als auch einen zylindrischen Querschnitt aufweisen bzw. jeweils als vieleckiges oder prismatisches oder zylindrisches Volumen ausgebildet sein.

Bei einer bevorzugten Variante der Spritzgießvorrichtung gemäß der Erfindung ist vorgesehen, dass die Artikelkavität und die Nebenkavität als zylindrisches Volumen ausgebildet sind. Das Volumen der Nebenkavität ist zweckmäßigerweise so bemessen, dass es die gesamte Menge der von dem Projektil verdrängten Formmasse aufnehmen kann.

Der Formkern ist zweckmäßigerweise als Dorn ausgebildet, der beispielsweise eine Kontur aufweisen kann, die komplementär zu einer endseitig muffenförmig aufgeweiteten Kontur der Artikelkavität ausgebildet ist. Der Formkern bildet zweckmäßigerweise in der Artikelkavität einen umlaufenden Ringspalt oder Ringraum, der mit der Formmasse befüllbar ist. Der Formkern ist zweckmäßigerweise als Kalibrierdorn zur Erzeugung der Anschlussgeometrie des Rohres ausgebildet.

Der Formkern kann mittels eines hydraulischen oder pneumatischen Stellantriebes rotatorisch und/oder translatorisch bewegbar sein.

Wenn der Formkern rotatorisch angetrieben ist, d.h., als Drehkern ausgebildet ist, kann dieser eine Mantelfläche mit wenigstens einem gewindeformenden Abschnitt aufweisen.

Der Formkern dichtet in einer ersten Stellung die Artikelkavität ab. In einer zweiten Stellung des Formkerns, die die gezogene Entformungsstellung ist, gibt dieser die zweite Öffnung der Artikelkavität frei.

Der Formkern kann einen in diesem verstellbar angeordneten Verschlusskörper aufweisen, der in einer ersten Stellung die Nebenkavität verschließt und der in einer zweiten Stellung die Nebenkavität freigibt.

Gemäß der Erfindung ist es vorgesehen, dass das zylindrische Volumen der Nebenkavität einen Durchmesser aufweist, der kleiner oder gleich dem Durchmesser des Projektils ist.

Bei einer Variante der Spritzgießvorrichtung ist in der Mantelfläche des Projektils ein hinterschnittenes Sackloch vorgesehen.

In einer inneren Begrenzungswand der Nebenkavität ist wenigstens eine Vertiefung und/oder eine Einprägung vorgesehen sein. In dem Fall, in dem das Projektil in die Nebenkavität des Formkerns eindringt, wird dieses einen dünnen Film an geschmolzener Formmasse zwischen einer inneren Begrenzungswand der Nebenkavität und dem Projektil erzeugen. Dieser Film ist unter Umständen noch mit der das Rohr bildenden Formmasse verbunden. Dieser Film wird abgerissen, wenn der Formkern gezogen wird. Um das Abreißen zu erleichtern, wird sich in der Vertiefung oder Einprägung Formmasse akkumulieren, die sich der Entformungsbewegung des Formkerns widersetzen möchte, so dass eine Zugkraft auf die zwischen dem Formkern und der das Rohr bildenden Formmasse erzeugte Dünnstelle oder Sollbruchlinie ausgeübt wird. Selbstverständlich können mehrere Vertiefungen oder Einprägungen am Umfang der inneren Begrenzungswand der Nebenkavität vorgesehen sein.

Alternativ hierzu kann vorgesehen sein, dass der Formkern stirnseitig eine in die Nebenkavität beziehungsweise in eine Öffnung der Nebenkavität hervorstehende Abstreifer-Lippe aufweist. An dieser Abstreifer-Lippe würde der von dem Projektil mitgenommene Film der Formmasse abgeschert werden.

Die Erfindung wird nachstehend unter Bezugnahme auf die in den Zeichnungen dargestellten Ausführungsbeispiele erläutert.

Es zeigen:
- Figur 1: eine Teilschnittansicht einer Spritzgießvorrichtung 1 gemäß der Erfindung gemäß einem ersten Ausführungsbeispiel,
- Figur 2: eine Teilschnittansicht einer Spritzgießvorrichtung gemäß der Erfindung nach einem zweiten Ausführungsbeispiel und die
- Figuren 3a und 3b: eine Teilschnittansicht einer Spritzgießvorrichtung gemäß der Erfindung nach einem dritten Ausführungsbeispiel der Erfindung.

Das Verfahren gemäß der Erfindung wird nachstehend mit Bezug auf die Teile einer Spritzgießvorrichtung 1 darstellenden Figuren erläutert.

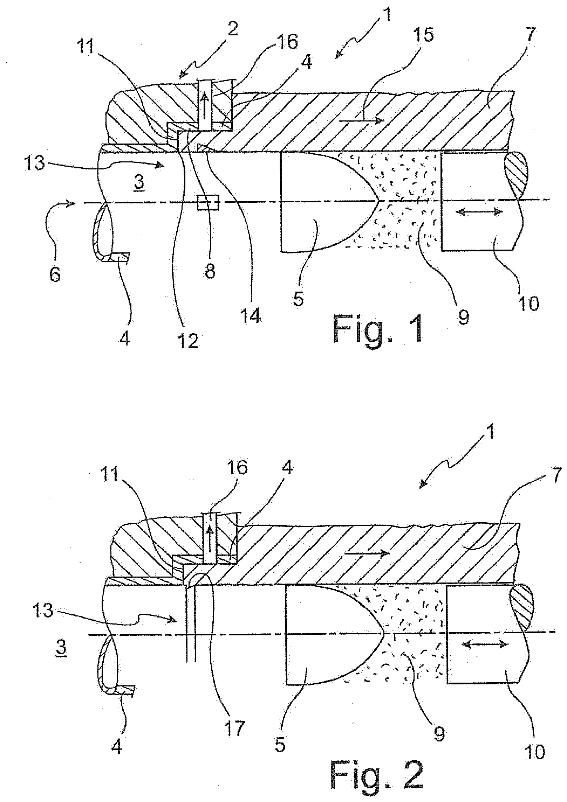

Hierzu wird zunächst Bezug genommen auf die Figur 1, die einen Teilschnitt durch eine Spritzgießvorrichtung 1 gemäß der Erfindung zeigt. Die Spritzgießvorrichtung 1 umfasst ein Werkzeug 2, welches in den Figuren nur andeutungsweise dargestellt ist und beispielsweise zwei Hälften umfasst, die in geschlossenem Zustand eine Artikelkavität 3 definieren, welche ein Negativ eines zu fertigenden Rohres 4 bildet.

Die Figuren zeigen ein Ende der Artikelkavität 3 im Bereich eines Endes des Rohres 4. Insbesondere zeigen die Figuren dasjenige Ende des auszuformenden Rohres 4, welches muffenartig aufgeweitet ist und eine Anschlussgeometrie zur Aufnahme eines Anschlussbauteiles aufweist. In den Figuren ist dasjenige Ende der Artikelkavität 3 dargestellt, das von einem nicht gezeigten Anguss und einer ersten Öffnung mit einer Injektionsvorrichtung entfernt angeordnet ist.

Das Werkzeug 2 der Spritzgießvorrichtung 1 besteht beispielsweise aus zwei Formhälften, die die Artikelkavität 3 definieren, wobei die Artikelkavität 3 als Negativ eines mehrfach im Raum gekrümmten Rohres (3-D-Rohr) ausgebildet ist. Das Werkzeug kann mehrere bewegliche Bauteile in Form von Schiebern oder dergleichen aufweisen, die in der Zeichnung nicht dargestellt sind. An dem nicht dargestellten Ende des Werkzeugs 2 beziehungsweise der Artikelkavität 3 ist eine Injektionsvorrichtung zur Injektion eines Fluids gegen ein durch die Artikelkavität 3 zu treibendes Projektil 5 vorgesehen, wobei die Injektionsvorrichtung einen Projektilträger mit wenigstens einer Injektionsdüse und mit wenigstens einer Projektilaufnahme für das Projektil 5 als Verdrängerkörper für eine in die Artikelkavität 3 einzufüllende thermoplastische Formmasse umfasst.

An dem zweiten in den Figuren dargestellten Ende der Artikelkavität 3 ist die Artikelkavität 3 trichterförmig oder muffenförmig aufgeweitet. In diesem Bereich bildet die Artikelkavität 3 eine zweite Öffnung 6, in die ein Formkern 7 so eingesetzt ist, dass sie die Artikelkavität 3 im Bereich der zweiten Öffnung 6 abdichtet.

In Figur 1 ist der Formkern 7 in seiner die Artikelkavität 3 abdichtenden Stellung gezeigt. Von dieser Stellung ist der Formkern 7 in eine die Artikelkavität 3 freigebende Stellung entformbar beziehungsweise ziehbar. Diese Stellung des Formkerns 7 ist in den Zeichnungen nicht dargestellt.

Der Formkern 7 ist als im Querschnitt kreisrunder Kalibrierdorn ausgebildet. Im Bereich der Aufweitung der Artikelkavität 3 bildet der Formkern 7 einen Formhohlraum, der als Ringraum 8 ausgebildet ist. Der so gebildete Anschlussquerschnitt des Rohres 4 ist als im Querschnitt kreisrunde Muffe ausgebildet, die Erfindung ist jedoch so zu verstehen, dass dieser Bereich des Rohres 4 eine beliebige andere Form aufweisen kann, je nach Gestalt der Artikelkavität 3 und des Formkerns 7 in diesem Bereich des Werkzeugs 2.

Der Formkern 7 umschließt ein vorzugsweise zylindrisches Volumen 9, das eine Nebenkavität des Werkzeugs 2 bildet. Das Volumen 9 des Formkerns 7 ist so bemessen, dass es, wie nachstehend noch beschrieben wird, vollständig die von dem Projektil 5 verdrängte Formmasse aufnehmen kann. Von dem Formkern 7 sind in den Figuren nur Teile dargestellt, die Größenverhältnisse sind nicht naturgetreu und proportional, die Figur 1 zeigt nur eine schematische Ansicht von Teilen des Werkzeugs 2.

Das als Nebenkavität dienende Volumen 9 des Formkerns ist vorzugsweise zylindrisch ausgebildet und bildet eine Verlängerung beziehungsweise einen Fortsatz der Artikelkavität 3. Das Volumen 9 des Formkerns 7 ist koaxial und fluchtend zur der Artikelkavität 3 ausgerichtet und hat bei den in den Figuren 1 und 2 dargestellten Ausführungsbeispielen einen Innendurchmesser, der dem Innendurchmesser der Artikelkavität 3 und dem Außendurchmesser des Projektils 5 entspricht. Wenn die Artikelkavität 3 und das Volumen 9 des Formkerns 7 eine vieleckige oder prismatische Innenkontur aufweisen, entspricht die Außenkontur des Projektils zweckmäßigerweise der Innenkontur der Artikelkavität und der Nebenkavität.

In allen Figuren ist das Volumen 9 des Formkerns 7 in geöffnetem Zustand dargestellt, in diesem Zustand ist das Projektil 5 jeweils in seiner Endlage dargestellt.

Bei dem in Figuren 1 bis 3 dargestellten Ausführungsbeispiel umfasst der Formkern 7 einen beweglichen und zylindrischen Verschlusskörper 10, der in den Figuren 1 bis 3 jeweils in einer geöffneten Stellung gezeigt ist, in der der Verschlusskörper 10 jeweils das Volumen 9 des Formkerns 7 freigibt.

Zu Beginn des erfindungsgemäßen Verfahrens befindet sich der Verschlusskörper 10 in einer Stellung, in der er bündig mit einer Stirnfläche 11 des Formkerns 7 abschließt. Der Verschlusskörper 10 ist innerhalb des Formkerns 7 verstellbar angeordnet, beispielsweise ist der Verschlusskörper 10 über eine nicht dargestellte Mechanik hydraulisch oder pneumatisch zwischen zwei Endlagen verstellbar. In derjenigen Stellung des Verschlusskörpers 10, die nicht dargestellt ist, in der dieser das Volumen 9 des Formkerns abschließt, erfolgt das Füllen der Artikelkavität 3 mit einer thermoplastischen Formmasse über einen von dem gezeigten Ende der Artikelkavität 3 entfernt angeordneten Anguss.

Nachdem die Artikelkavität 3 ganz oder teilweise gefüllt wurde, erstreckt sich die Formmasse über den gesamten Querschnitt der Artikelkavität und in den Ringraum 8. Sodann wird der Verschlusskörper 10 in eine in Figur 1 dargestellte geöffnete Stellung verbracht, in der das Volumen 9 des Formkerns 7 freigegeben ist, mithin eine nicht gefüllte Nebenkavität bildet.

Sodann wird das Projektil 5 mit einem Fluid, beispielsweise mit Wasser, beaufschlagt und durch die Artikelkavität 3 hindurchgetrieben, wobei dieses eine flüssige Seele der in die Artikelkavität 3 gefüllten thermoplastischen Formmasse in das Volumen 9 des Formkerns verdrängt. Figur 1 zeigt das Projektil 5 in seiner Endlage, in der dieses in das Volumen 9 des Formkerns 7 eingetrieben wurde. Dabei wird die thermoplastische Formmasse an einer inneren umlaufenden Kante 12 einer Öffnung 13 des Volumens 9 des Formkerns 7 abgeschert, wobei das Projektil 5 zwischen sich und der inneren Umfassungswand des Volumens 9 einen dünnen Film an Formmasse ausbildet. Ein Teil der Formmasse wird dabei in Vertiefungen 14 an der inneren Begrenzungswand des Volumens 9 des Formkerns 7 verdrängt.

In einem weiteren Verfahrensschritt wird der Formkern 7 in Richtung des Pfeils 15 aus der Artikelkavität 3 herausgezogen, wobei die in die Vertiefungen 14 verdrängte Formmasse, die zwischenzeitlich zumindest teilweise erhärtet ist, sich dieser Auszugsbewegung des Formkerns 7 widersetzt. Infolgedessen wird ein Zug auf den in das Volumen 9 des Formkerns 7 überstehenden Materialfilm der zwischenzeitlich erhärteten Formmasse ausgeübt. Infolgedessen reißt das überstehende Material ab. Mit dem Formkern 7 wird so die in das Volumen 9 verdrängte Formmasse von der das Rohr 4 formenden Formmasse getrennt.

Mit den Bezugszeichen 16 sind weitere Formschieber bezeichnet, die seitlich in die Artikelkavität 3 hineinragen und gegen den Formkern 7 seitlich Fenster in der so ausgeformten Muffe des Rohres 4 erzeugen.

Das in Figur 2 dargestellte Ausführungsbeispiel der Spritzgießvorrichtung 1 gemäß der Erfindung entspricht im Wesentlich dem in Figur 1 dargestellten Ausführungsbeispiel der Spritzgießvorrichtung 1, wobei gleiche Bauteile mit gleichen Bezugszeichen bezeichnet sind. Das in Figur 2 dargestellte Ausführungsbeispiel unterscheidet sich von demjenigen in Figur 1 dargestellten Ausführungsbeispiel dadurch, dass der Formkern 7 stirnseitig eine in die Öffnung 13 des Volumens 9 hervorstehende Abstreifer-Lippe 17 aufweist, an der das Projektil 5 beim Eintreiben in das Volumen 9 die thermoplastische Formmasse zwischen dem Projektil 5 und der inneren Begrenzungswand des Volumens 9 abschert.

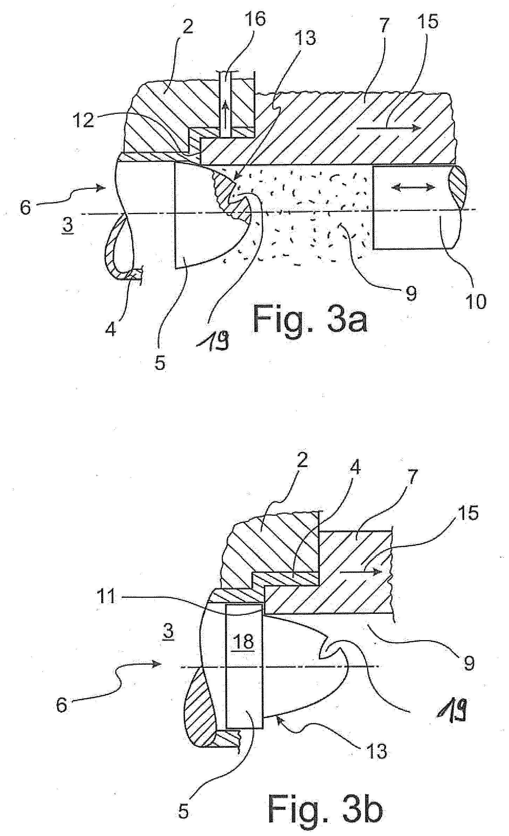

Das in Figur 3 dargestellte Ausführungsbeispiel entspricht im Wesentlichen demjenigen in den Figuren 1 und 2, wobei gleiche Bauteile mit gleichen Bezugszeichen versehen sind.

Bei dem Ausführungsbeispiel gemäß Figur 3a hat das Projektil 5 eine durchbrochene Mantelfläche, in der sich thermoplastische Formmasse ansammeln kann. Beim Aushärten der thermoplastischen Formmasse verbindet sich diese mit dem Projektil, so dass beim Ziehen des Formkerns 7 das überstehende Material abgerissen wird. Hierzu kann die Mantelfläche des Projektils 5 beispielsweise ein Sackloch 19 aufweisen. Das Sackloch bildet einen Hinterschnitt, der eine Verankerung der aushärtenden Formmasse bewirkt.

Darüber hinaus hat die Öffnung 13 des Volumens 9 einen geringfügig kleineren Durchmesser als die Artikelkavität 3 und als der größte Durchmesser des Projektils 5, so dass die die Öffnung 13 begrenzende umlaufende Kante 12 eine Quetschkante bildet, gegen die das Projektil 9 die thermoplastische Formmasse abtrennt.

Die Erfindung ist so zu verstehen, dass die besondere Ausgestaltung des Projektils und die Konfiguration der Öffnung 13 des Volumens 9 Maßnahmen sind, die unabhängig voneinander realisierbar sind.

Die in Figur 3b gezeigte Variante der Spritzgießvorrichtung unterscheidet sich von derjenigen in Figur 3 dadurch, dass das Projektil 5 einen umlaufenden Absatz 18 aufweist, der gegen die Stirnfläche 11 des Formkerns 7 anschlägt. Auch bei diesem Ausführungsbeispiel ist der Durchmesser der Öffnung 13 des Volumens 9 kleiner als der Durchmesser der Artikelkavität 3.

### Bezugszeichenliste:

- 1.: Spritzgießvorrichtung
- 2.: Werkzeug
- 3.: Artikelkavität
- 4.: Rohr
- 5.: Projektil
- 6.: Zweite Öffnung
- 7.: Formkern
- 8.: Ringraum
- 9.: Volumen des Formkerns
- 10.: Verschlusskörper
- 11.: Stirnfläche
- 12.: Kante
- 13.: Öffnung des Volumens
- 14.: Vertiefungen in der inneren Begrenzungswand des Volumens
- 15.: Pfeil
- 16.: Formschieber
- 17.: Abstreifer-Lippe
- 18.: Absatz
- 19.: Sackloch

## Patentansprüche

1. Verfahren zur Herstellung eines Rohres (4) durch Spritzgießen einer thermoplastischen Formmasse unter Verwendung einer Spritzgießvorrichtung (1) mit einer Artikelkavität (3), die die Außenkontur des Rohres (4) definiert, mit einer Injektionsvorrichtung, die dazu ausgebildet ist, ein Projektil (5) durch die mit der thermoplastischen Formmasse gefüllte Artikelkavität (3) unter Verdrängung einer flüssigen Seele der Formmasse zu treiben, wobei das Verfahren folgende Verfahrensschritte umfasst:
A) Einführen eines Projektils (5) in eine erste Öffnung der Artikelkavität (3),
B) Verschließen einer zweiten von der ersten Öffnung entfernt angeordnete Öffnung der Artikelkavität (6) mit einem Formkern (7), der mit der Artikelkavität (3) einen Formhohlraum bildet und der eine mit der Formmasse befüllbare Nebenkavität aufweist,
C) wenigstens teilweises Füllen der Artikelkavität (3) und des Formhohlraums mit der thermoplastischen Formmasse,
D) Hindurchtreiben des Projektils (5) durch die Artikelkavität (3) von der ersten Öffnung zu der zweiten Öffnung (6) unter teilweiser Verdrängung der Formmasse in die Nebenkavität, wobei das Projektil (5) gegen den oder in den Formkern (7) getrieben wird und
E) Ziehen des Formkerns (7) mit der gefüllten Nebenkavität, wobei die verdrängte Formmasse von der das Rohr (4) bildenden Formmasse getrennt wird, und wobei zwischen der das Rohr (4) bildenden Formmasse und der in die Nebenkavität verdrängten Formmasse eine Dünnstelle oder eine Sollbruchlinie erzeugt wird.

2. Verfahren nach Anspruch 1, **dadurch gekennzeichnet, dass** die Nebenkavität des Formkerns (7) während des Füllens der Artikelkavität (3) zugehalten wird.

3. Verfahren nach einem der Ansprüche 1 oder 2, **dadurch gekennzeichnet, dass** die Nebenkavität unmittelbar vor dem Hindurchtreiben des Projektils (5) durch die Artikelkavität (3) geöffnet wird.

4. Verfahren nach einem der Ansprüche 1 oder 2, **dadurch gekennzeichnet, dass** die Nebenkavität unter Zuhilfenahme des von der verdrängten Formmasse erzeugten Schmelzedrucks geöffnet wird.

5. Verfahren nach einem der Ansprüche 2 bis 4, **dadurch gekennzeichnet, dass** der Formkern (7) einen bewegbaren Verschlusskörper (10) aufweist, der die Nebenkavität zuhält und der unmittelbar vor dem Füllen der Artikelkavität (3) oder während des Füllens der Artikelkavität (3) in eine die Nebenkavität freigebende, geöffnete Stellung bewegt wird.

6. Verfahren nach einem der Ansprüche 1 bis 5, **dadurch gekennzeichnet, dass** das Projektil (5) in die Nebenkavität hineingetrieben wird und in der Endlage die Nebenkavität verschließt.

7. Verfahren nach einem der Ansprüche 1 bis 5, **dadurch gekennzeichnet, dass** das Projektil (5) teilweise in die Nebenkavität hineingetrieben wird, wobei eine Mantelfläche des Projektils (5) gegen eine Quetschkante des Formkerns (7) zur Anlage gebracht wird und das Projektil (5) in dieser Endlage die Nebenkavität verschließt.

8. Verfahren nach einem der Ansprüche 1 bis 5, **dadurch gekennzeichnet, dass** das Projektil (5) teilweise in die Nebenkavität hineingetrieben wird, wobei ein umlaufender Absatz (18) des Projektils (5) gegen eine Stirnseite des Formkerns (7) zur Anlage gebracht wird, wobei das Projektil (5) in dieser Endlage die Nebenkavität verschließt.

9. Verfahren nach Anspruch 7 oder 8, **dadurch gekennzeichnet, dass** das Projektil (5) eine durchbrochene Mantelfläche aufweist, in der sich thermoplastische Formmasse ansammeln kann, wobei sich die Formmasse beim Aushärten mit dem Projektil (5) verbindet.

10. Verfahren nach Anspruch 9, **dadurch gekennzeichnet, dass** in der Mantelfläche des Projektils (5) ein hinterschnittenes Sackloch (19) vorgesehen ist.

11. Spritzgießvorrichtung (1), insbesondere zur Durchführung des Verfahrens nach einem der Ansprüche 1 bis 9, zur Herstellung von Rohren mit einem eine Artikelkavität (3) bildenden Werkzeug (2), mit Mitteln zum Füllen der Artikelkavität (3) mit einer thermoplastischen Formmasse, mit einer Injektionsvorrichtung zur Injektion eines Fluids gegen ein durch die Artikelkavität zu treibendes Projektil von einer ersten Öffnung der Artikelkavität (3) in Richtung auf eine zweite Öffnung der Artikelkavität (6), mit einer Nebenkavität zur Aufnahme der von dem Projektil (5) verdrängten Formmasse, mit einem in die zweite Öffnung (6) einsetzbaren Formkern (7), der mit der Artikelkavität (3) einen mit der Formmasse befüllbaren Formhohlraum bildet, wobei der Formkern (7) ein Volumen umschließt, welches die Nebenkavität bildet und dass das Volumen der Nebenkavität einen Querschnitt aufweist, der kleiner oder etwa gleich dem Querschnitt des Projektils (5) ist, **dadurch gekennzeichnet, dass** eine innere Begrenzungswand der Nebenkavität mit wenigstens einer Vertiefung und/oder einer Einprägung versehen ist.

12. Spritzgießvorrichtung (1) nach Anspruch 11, **dadurch gekennzeichnet, dass** die Nebenkavität als prismatisches oder zylindrisches Volumen ausgebildet ist.

13. Spritzgießvorrichtung (1) nach einem der Ansprüche 11 oder 12, **dadurch gekennzeichnet, dass** der Formkern (7) einen in diesem verstellbar angeordneten Verschlusskörper (10) aufweist, der in einer ersten Stellung die Nebenkavität verschließt und der in einer zweiten Stellung die Nebenkavität freigibt.

14. Spritzgießvorrichtung (1) nach einem der Ansprüche 11 bis 13, **dadurch gekennzeichnet, dass** der Formkern (7) stirnseitig eine in die Nebenkavität hervorstehende Abstreifer-Lippe (17) aufweist.

## Claims

1. A method for producing a tube (4) by injection molding a thermoplastic molding compound while using an injection molding device (1) having an article cavity (3) which defines the external contour of the tube (4), having an injection device which is configured for driving a projectile (5) through the article cavity (3) that is filled with the thermoplastic molding compound while displacing a liquid core of the molding compound, wherein the method comprises the following method steps:
A) introducing a projectile (5) into a first opening of the article cavity (3);
B) closing a second opening disposed remote from the first opening of the article cavity (6) by way of a mold core (7) which together with the article cavity (3) forms a molding cavity and which has a secondary cavity that is capable of being filled with the molding compound;
C) at least partially filling the article cavity (3) and the molding cavity with the thermoplastic molding compound;
D) driving the projectile (5) from the first opening through the article cavity (3) to the second opening (6) while partially displacing the molding compound into the secondary cavity, wherein the projectile (5) is driven toward or into the mold core (7); and
E) pulling the mold core (7) together with the filled secondary cavity, wherein the displaced molding compound is separated from the molding compound that forms the tube (4), and wherein a thin place or a predetermined breaking line is generated between the molding compound that forms the tube (4) and the molding compound that is displaced into the secondary cavity.

2. The method as claimed in claim 1, **characterized in that** the secondary cavity of the mold core (7) is kept closed during the filling of the article cavity (3) .

3. The method as claimed in one of claims 1 or 2, **characterized in that** the secondary cavity is opened immediately prior to the projectile (5) being driven through the article cavity (3).

4. The method as claimed in one of claims 1 or 2, **characterized in that** the secondary cavity is opened with the aid of the melt pressure that is generated by the displaced molding compound.

5. The method as claimed in one of claims 2 to 4, **characterized in that** the mold core (7) has a movable closure member (10) which keeps the secondary cavity closed and immediately prior to the article cavity (3) being filled, or while the article cavity (3) is being filled, is moved into an opened position that releases the secondary cavity.

6. The method as claimed in one of claims 1 to 5, **characterized in that** the projectile (5) is driven into the secondary cavity and in the terminal position closes the secondary cavity.

7. The method as claimed in one of claims 1 to 5, **characterized in that** the projectile (5) is driven partially into the secondary cavity, wherein a shell area of the projectile (5) is brought into contact with a pinch edge of the mold core (7) and the projectile (5) in this terminal position closes the secondary cavity.

8. The method as claimed in one of claims 1 to 5, **characterized in that** the projectile (5) is driven partially into the secondary cavity, wherein an encircling shoulder (18) of the projectile (5) is brought into contact with a front edge of the mold core (7), wherein the projectile (5) in this terminal position closes the secondary cavity.

9. The method as claimed in claim 7 or 8, **characterized in that** the projectile (5) has a perforated shell area in which the thermoplastic molding compound can accumulate, wherein the molding compound when curing connects to the projectile (5).

10. The method as claimed in claim 9, **characterized in that** an undercut blind bore (19) is provided in the shell area of the projectile (5).

11. An injection molding device (1), in particular for carrying out the method as claimed in one of claims 1 to 9, for producing tubes, having a tool (2) that forms an article cavity (3), having means for filling the article cavity (3) with a thermoplastic molding compound, having an injection device for injecting a fluid toward a projectile that is to be driven from a first opening of the article cavity (3) through the article cavity in the direction toward a second opening of the article cavity (6), having a secondary cavity for receiving the molding compound that is displaced by the projectile (5), having a mold core (7) which is insertable into the second opening (6) and which together with the article cavity (3) forms a molding cavity that is capable of being filled with the molding compound, wherein the mold core (7) encloses a volume which forms the secondary cavity, and that the volume of the secondary cavity has a cross section which is smaller than or approximately equal to the cross section of the projectile (5), **characterized in that** an internal delimitation wall of the secondary cavity is provided with at least one depression and/or an embossed feature.

12. The injection molding device (1) as claimed in claim 11, **characterized in that** the secondary cavity is configured as a prismatic or cylindrical volume.

13. The injection molding device (1) as claimed in either of claims 11 and 12, **characterized in that** the mold core (7) has a closure member (10) that is disposed so as to be adjustable in said mold core (7) and in a first position closes the secondary cavity and in a second position releases the secondary cavity.

14. The injection molding device (1) as claimed in one of claims 11 to 13, **characterized in that** the mold core (7) at the front edge has a wiper lip (17) that projects into the secondary cavity.

## Revendications

1. Procédé de fabrication d'un tube (4) par moulage par injection d'une composition de moulage thermoplastique à l'aide d'un dispositif de moulage par injection (1) comprenant une cavité d'article (3) qui définit le contour extérieur du tube (4), un dispositif d'injection qui est conçu pour propulser un projectile (5) à travers la cavité d'article (3), remplie de la composition de moulage thermoplastique, par déplacement d'un noyau liquide de la composition de moulage, le procédé comprenant les étapes suivantes :
A) introduire un projectile (5) dans une première ouverture de la cavité d'article (3),
B) fermer une deuxième ouverture de la cavité d'article (6), située à distance de la première ouverture, avec un noyau de moule (7) qui forme avec la cavité d'article (3) une cavité de moule et qui comporte une cavité secondaire pouvant être remplie avec la composition de moulage,
C) remplir au moins partiellement la cavité d'article (3) et la cavité de moule avec la composition de moulage thermoplastique,
D) propulser le projectile (5) à travers la cavité d'article (3) de la première ouverture à la deuxième ouverture (6) par déplacement partiel de la composition de moulage jusque dans la cavité secondaire, le projectile (5) étant propulsé contre ou dans le noyau de moule (7) et
E) tirer le noyau de moule (7) avec la cavité secondaire remplie, la composition de moulage déplacée étant séparée de la composition de moulage formant le tube (4), et un emplacement aminci ou une ligne de rupture étant généré (e) entre la composition de moulage formant le tube (4) et la composition de moulage déplacée dans la cavité secondaire.

2. Procédé selon la revendication 1, **caractérisé en ce que** la cavité secondaire du noyau de moule (7) est maintenue fermée pendant le remplissage de la cavité d'article (3).

3. Procédé selon l'une des revendications 1 ou 2, **caractérisé en ce que** la cavité secondaire est ouverte juste avant de propulser le projectile (5) à travers la cavité d'article (3).

4. Procédé selon l'une des revendications 1 ou 2, **caractérisé en ce que** la cavité secondaire est ouverte à l'aide de la pression de fusion générée par la composition de moulage déplacée.

5. Procédé selon l'une des revendications 2 à 4, **caractérisé en ce que** le noyau de moule (7) comporte un corps de fermeture mobile (10) qui ferme la cavité secondaire et qui est déplacé vers une position ouverte libérant la cavité secondaire juste avant de remplir la cavité d'article (3) ou pendant le remplissage de la cavité d'article (3).

6. Procédé selon l'une des revendications 1 à 5, **caractérisé en ce que** le projectile (5) est propulsé dans la cavité secondaire et ferme la cavité secondaire en position finale.

7. Procédé selon l'une des revendications 1 à 5, **caractérisé en ce que** le projectile (5) est propulsé partiellement dans la cavité secondaire, une surface latérale du projectile (5) étant amenée en appui contre un bord de sertissage du noyau de moule (7) et le projectile (5) fermant la cavité secondaire dans cette position finale.

8. Procédé selon l'une des revendications 1 à 5, **caractérisé en ce que** le projectile (5) est propulsé partiellement dans la cavité secondaire, un épaulement périphérique (18) du projectile (5) étant amené en appui contre une face d'extrémité du noyau de moule (7), le projectile (5) fermant la cavité secondaire dans cette position finale.

9. Procédé selon la revendication 7 ou 8, **caractérisé en ce que** le projectile (5) comporte une surface latérale perforée dans laquelle une composition de moulage thermoplastique peut s'accumuler, la composition de moulage étant reliée au projectile (5) lors du durcissement.

10. Procédé selon la revendication 9, **caractérisé en ce qu'**un trou borgne (19) en contre-dépouille est ménagé dans la surface latérale du projectile (5).

11. Dispositif de moulage par injection (1), destiné en particulier à la mise en oeuvre du procédé selon l'une des revendications 1 à 9 et à la fabrication de tubes, le dispositif comprenant un outil (2) formant une cavité d'article (3), des moyens de remplissage de la cavité d'article (3) avec une composition de moulage thermoplastique, un dispositif d'injection destiné à injecter un fluide contre un projectile devant être propulser à travers la cavité d'article depuis une première ouverture de la cavité d'article (3) vers une deuxième ouverture de la cavité d'article (6), une cavité secondaire destinée à recevoir la composition de moulage déplacée par le projectile (5), un noyau de moule (7) pouvant être inséré dans la deuxième ouverture (6) et formant avec la cavité d'article (3) une cavité de moule pouvant être remplie de la composition de moulage, le noyau de moule (7) renfermant un volume qui forme la cavité secondaire et le volume de la cavité secondaire ayant une section transversale inférieure ou à peu près égale à la section transversale du projectile (5), **caractérisé en ce qu'**une paroi de délimitation intérieure de la cavité secondaire est pourvue d'au moins un creux et/ou d'une empreinte.

12. Dispositif de moulage par injection (1) selon la revendication 11, **caractérisé en ce que** la cavité secondaire est conçue comme un volume prismatique ou cylindrique.

13. Dispositif de moulage par injection (1) selon l'une des revendications 11 ou 12, **caractérisé en ce que** le noyau de moule (7) comporte un corps de fermeture (10) qui peut être déplacé dans celui-ci et qui ferme la cavité secondaire dans une première position et libère la cavité secondaire dans une deuxième position.

14. Dispositif de moulage par injection (1) selon l'une des revendications 11 à 13, **caractérisé en ce que** le noyau de moule (7) comporte du côté extrémité une lèvre de raclage (17) saillante dans la cavité secondaire.
